# EUROPEAN PATENT APPLICATION

(11) **EP 4 636 970 A1**
(43) Date of publication of application: **22.10.2025**
(21) Application number: 24170660.5
(22) Date of filing: 16.04.2024
(51) Int. Cl.: H02J 3/00

(54) **POWER GRID OUTAGE PREDICTION METHOD AND SYSTEM**

(71) Applicant: Hitachi Energy Ltd, 8050 Zürich (CH)
(72) Inventor: Knezovic, Katarina, 8006 Zurich (CH); Peter, Lena, 67063 Ludwigshafen am Rhein (DE); Fahy, Elise Joy, 1162 St-Prex (CH); Shchetinin, Dmitry, 5600 Lenzburg (CH); Subasic, Milos, 68161 Mannheim (DE)
(74) Representative: Meier, Florian

(57) **Abstract**

To perform a grid outage prediction, a processing system (30) uses a data-driven processing technique (32) to determine a grid outage indicator that quantifies a number or fraction of customers in an area predicted to experience a grid outage over a predictive horizon. The processing system (30) provides input signals, based on input data (28) received by the processing system (30), to the data-driven processing technique (32).

## Description

### TECHNICAL FIELD

Embodiments relate to methods and processing systems useful in association with power grids. Embodiments relate in particular to methods and processing systems useful in association with a quantitative prediction of grid outages that are caused by events that may be external to the power grid, such as weather conditions.

### BACKGROUND

Power grids are complex systems that are essential to modern society, providing electricity to customers such as residential, industrial, or infrastructural customers. Power grids can be vulnerable to a number of external factors that can lead to grid outages. Several examples for external factors include weather variables. High winds can knock down power lines, lightning can damage transformers and substations, and heavy rain can cause flooding that undermines the stability of power infrastructure. Winter storms can lead to ice accumulating on power lines, which increases the weight on these lines and can lead to breakages. Ice can also build up on trees, causing branches to break off and fall onto power lines. Freezing temperatures can also affect the operation of generation facilities. Wildfires can damage power lines, poles, and other infrastructure. Solar flares and coronal mass ejections can cause geomagnetic storms that induce currents in power lines, potentially damaging transformers and other critical components of the power grid. Seismic activity can damage power plants, break power lines, and disrupt the operation of grid components, leading to outages.

These external variables can interact with the power grid in unpredictable ways. Grid operators must continually monitor conditions and have contingency plans in place to mitigate the impact of such events. Grid modernization, such as integrating smart grid technologies, can help improve the resilience of power systems to external variables.

To assist operators in pro-active or reactive actions that help reduce power outages or that help restore power more quickly, techniques are desirable that allow not only the occurrence of an outage to be anticipated, but that also provide quantitative information on the outage.

CN 113 869 586 A discloses a techniques useful in association with typhoon events. However, there is still a need in the art for improved techniques of predicting power outages, in particular for more versatile techniques that provide quantitative information that facilitates pro-active or reactive actions to be initiated to reduce the harm potentially caused by outages and/or to restore power.

### SUMMARY

It is an objective of the invention to provide a method and a processing system operative to provide quantitative predictions for a number of customers affected by future outages in consideration of variables that affect grid outages. It is also an objective of the invention to provide such a method and processing system that are versatile in the sense that they do not necessarily require indications of previously identified potentially hazardous events, but that they can operate in a versatile manner. It is also an objective of the invention to provide such a method and processing system that are versatile in the sense that they allow additional information to be considered in the processing, such as information related to previously observed changes in outage probability as a function of month or time of day.

According to embodiments, a method, a processing system, a method of providing a data-driven processing model, and a machine-readable instruction code recited in the independent claims are provided. The dependent claims define preferred or advantageous embodiments.

According to an aspect of the invention, there is provided a method of performing a grid outage prediction. The method comprises receiving, by a processing system, input data. The input data is indicative of values of at least one variable that affects occurrence of grid outages in an area. The values comprise values for a first time period preceding a time at which the grid outage prediction is performed and forecast values for a second time period later than the time at which the grid outage prediction is performed. The method comprises determining, by the processing system, at least one grid outage indicator over a predictive horizon. Determining the at least one grid outage indicator comprises: providing, by the processing system and based on the values for the first time period and the forecast values for the second time period, input signals for a data-driven processing technique; and processing, by the processing system, the input signals using the data-driven processing technique, wherein the data-driven processing technique provides the at least one grid outage indicator as an output, wherein the at least one grid outage indicator quantifies a number or fraction of customers in the area predicted to experience a grid outage over the predictive horizon.

Various effects and advantages are attained by the method. The method is operative to determine and use an indicator that provides a predictive, quantitative representation of the number or fraction of customers expected to experience an outage, given the input data. Thereby, the number of customers expected to experience an outage can be determined predictively in a quantitative manner, which facilitates actions that mitigate effects of the outages and/or help restore power to as many customers as possible in a timely manner. By applying a data-driven approach, the determination is based on objective criteria rather than human operator experience that may be more prone to errors. The method further provides the effect of not requiring (while allowing use of) information on the power grid to which it is being applies, and not requiring a pre-classification of its input into indicators for potentially hazardous weather situations.

The method may comprise triggering, by the processing system, at least one action based on the at least one grid outage indicator. This may be done automatically or semi-automatically.

Thereby, the method comprises using the result of the processing to automatically or semi-automatically trigger at least one action.

The values for the first time period and the forecast values for the second time period are values that relate to a same variable or to several variables, but for different time periods. In other words, the values for the first time period and the forecast values for the second time period comprise values of a variable for the first time period and the forecast values of the same variable for the second time period. The values for the first time period and the forecast values for the second time period may optionally comprise values of at least one further variable for the first time period and the forecast values of the same at least one further variable for the second time period.

Thereby, the method processes both historical values (the values for the first time period) which can be known from measurements and forecast values (the values for the second time period) of a same variable or of several variables, in order to predict the number of consumers expected to have a grid outage in the predictive horizon.

The first time period and/or the second time period may be immediately adjacent to the time at which the prediction is made. I.e., the first time period may extend to the time at which the prediction is made and/or the second time period may extend from the time at which the prediction is made. In other implementations, the first time period and/or the second time period need not be immediately adjacent to the time at which the prediction is made.

Thereby, the grid outage prediction can be performed in a versatile manner.

Providing the input signals may comprise generating, by the processing system, the input signals based on the input data and, more specifically, based on the values for the first time period and the forecast values for the second time period. Providing the input signals may comprise generating the input signals by applying a feature extraction to the input data and/or by performing other preprocessing.

Thereby, the processing system can generate features suitable for predicting the grid outage indicator from the input data.

Determining the at least one grid outage indicator may comprise determining, using the data-driven processing technique, the at least one grid outage indicator for several points in time within the predictive time horizon.

Thereby, the number or fraction of users expected to experience an outage can be determined in a time-resolved manner. This facilitates appropriate action to be taken even prior to occurrence of the outages.

The method may further comprise controlling a user interface to enable user input specifying at least one of: a number of the several points in time within the predictive time horizon; a duration of the predictive time horizon.

Thereby, the grid outage prediction is configurable. This facilitates adaptation to the needs of the power grid and/or of the power grid operator with which the processing system is deployed. For illustration, different predictive time horizons may be useful for taking an appropriate action, depending on, e.g., the type of power grid (transmission grid v. distribution grid) and/or the overall number of customers in the area.

The predictive time horizon may be equal to the second time period or shorter than the second time period.

Thereby, the grid outage prediction may be performed over all or only part of the second time period over which forecast values are available for the variables.

The input data may be indicative of the values for each of several areas. Determining, by the processing system, the at least one grid outage indicator may comprise applying the data-driven processing system to the input signals provided for each of the several areas to determine the at least one grid outage indicator in a spatially resolved manner and/or spatiotemporally resolved manner.

Thereby, quantitative information on expected future grid outages, given the values of the variables for different ones of the several areas, may be determined using the same data-driven processing technique. The input to the data driven processing technique may vary, depending on the area that is being considered and the values for the variables determined (e.g., by means of measurements) and/or forecast for that area.

The input data further may comprise outage data for at least part of the first time period, the outage data quantifying the a number or fraction of customers located in the area and determined to already have experienced the grid outage in the first time period. The input signals may be provided based on the outage data.

Thereby, information on already observed outages may be used in combination with the values for the variables that are different from outages that influence the occurrence of outages, to predict the future outages more accurately. This facilitates that appropriate action to be taken, by taking advantage of the more accurate grid outage prediction attained thereby.

The data-driven processing technique may be agnostic of a configuration and settings of a power grid for which the grid outage prediction is performed.

Thereby, the data-driven processing technique may be employed to determine the grid outage indicator for areas of the power grid having different topology, different settings, different status, and/or possibly even different type (such as transmission and distribution grids). Information on the respective power grid may optionally be included in the input data, such as values specifying cyclic variations in grid outages as a function of month of year and/or time of data. However, the same data driven processing technique may be applied to the inputs, without requiring (while still allowing) and adaptation in dependence on the respective grid type, grid topology, or grid settings.

The grid outage prediction may comprise a grid outage prediction for a distribution grid. The at least one grid outage indicator quantifies a number or fraction of distribution grid customers predicted to experience the outage over the predictive horizon.

Thereby, grid outage prediction may be performed for distribution grids. While transmission grid control has a longer history of technical consideration, distribution grid control has more recently become an active field of interest, due to the need for improved power grids necessary to accommodate climate change challenges and the novel requirements imposed in distribution grids and their control by increasing renewables penetration. Thus, the techniques disclosed herein lend themselves to providing enhanced techniques useful in association with the distribution grid control.

Processing the input data may comprise determining one or several of the following: an explainability that quantifies contributions of the various input signals to the at least one grid outage indicator; an uncertainty of the at least one grid outage indicator; a trustworthiness that quantifies a similarity of the input signals to training data used in training the data-driven processing technique.

Thereby, the grid outage prediction may determine not only quantitative information specifying the number or fraction of customers likely to experience an outage, but also supplementary data that is useful to assess the quality of the obtained prediction and/or to provide explainability for the data processing.

The data-driven processing technique may be operative such that it outputs the uncertainty.

Thereby, the knowledge of uncertainty associated with the grid outage prediction, as trained when training the data-driven processing technique, may be used during the inference phase.

The processing system may trigger the at least one action further based on one, several, or all of the above.

Thereby, the supplemental data that relates to the quality of the obtained prediction and/or the explainability may be used to automatically by the processing system. For illustration, the uncertainty and/or trustworthiness may be evaluated automatically by the processing system to determine which action is to be performed (such as to determine whether a fully automatic control action is to be performed or an operator information is to be enabled first).

The at least one variable may comprise weather data or an extreme weather indicator.

Thereby, grid outage prediction may be performed taking into account whether, which is among the main root causes of grid outages external to the power grid. The extreme weather indicator may comprise a time series of values that switches to indicate a point in time at which an extreme weather condition (such as a hurricane) is expected to occur. The weather data may comprise at least wind velocity data and one, several or all of: precipitation data (such as an amount of precipitation per time period); temperature data; air humidity; without being limited thereto.

The input data may comprise one or both of: power grid data related to the area; terrain data related to the area.

Thereby, additional information specific to the area for which the grid outage prediction is respectively performed may be utilized. The power grid data may comprise information on cyclic variations of power grid outages within the area as a function of time of year or time of day. Thus, even more accurate predictions can be made.

The method may further comprise determining, by the processing system or by a computing system different from the processing system, parameters of the data-driven processing technique, wherein determining the parameters may comprise performing a supervised training based on training data that comprise both measured weather variables and grid outage indicators observed during power grid field operation under the measured weather variables.

Thereby, the data-driven processing technique may be generated based on objective observations, namely historical data relating to previous outages and variables that have caused these previous outages. This reduces the risk of human-induced error, enhancing the quality of the grid outage prediction and making the identification and performance of an appropriate response action easier.

The at least one action may comprise an output action that outputs information related to the at least one grid outage indicator via an interface.

Thereby, a grid operator (such as a distribution system operator (DSO)) may be provided, for example via a human machine interface (HMI) installed in a control room or other control center, with the information required to initiate workforce deployment depending on the anticipated need for power restoration.

When one or several of explainability, trustworthiness, and uncertainty are determined, the at least one action may comprise an output action that outputs information related to the respective one of explainability, trustworthiness, and uncertainty.

By providing explainability via an HMI control operation, a plausibility check can still be performed by the DSO to verify that the influence of the variables (such as wind) on the outage prediction as reflected by the explainability is plausible.

By providing trustworthiness via an HMI control operation, information on the similarity or dissimilarity of the present conditions to previously considered conditions (as used in the training data for generating the data-driven processing technique) are conveyed. A higher degree of trustworthiness may reinforce the DOS's confidence in the determined prediction.

By providing uncertainty via an HMI control operation, information on the similarity or dissimilarity of the present conditions to previously considered conditions (as used in the training data for generating the data-driven processing technique) are conveyed. A higher degree of trustworthiness may reinforce the DOS's confidence in the determined prediction.

Alternatively or additionally, the at least one action may comprise a grid control action.

Thereby, the processing system may automatically or semi-automatically trigger a grid control action that is suitable to reduce the risk of (adverse effects of) predicted grid outages.

Alternatively or additionally, the at least one action may comprise a restoration action that helps restore power to customers affected by grid outages.

Thereby, the processing system may automatically or semi-automatically trigger a restoration action that is suitable to help restore power to as many customers as possible after the occurrence of the grid outages.

The data-driven processing technique may be an AI model, in particular a trained ML model.

Thereby, the processing logic applied to the input signals may be generated using techniques such as supervised training.

The data-driven processing technique may be a decision tree-based model. The data-driven processing technique may be an extreme gradient used (XGboost) technique.

Thereby, the processing logic applied to the input signals may be generated in an efficient and data-driven manner. I.e., the data-driven processing technique is based on previous observations. It has turned out that decision tree-based models, such as XGboost, are suitable for grid outage prediction, the techniques are not limited thereto.

Processing the input signals may comprise retrieving, by the processing system, time lag data specifying a time lag (such as an offset in timestamps) between occurrence of a change in a variable included in the input data and the grid outage is caused by the change. Retrieving the time lag data may comprise retrieving the time lag data from a storage system accessible to or included in the processing system.

Thereby, characteristic lags between changes in a variable (such as a change in air pressure) and a grid outage (which may be delayed as compared to the change in air pressure, as a potentially a seller the segment a situation of occurs only with a time lag after a change in air pressure) may be taken into consideration when determining the at least one grid outage indicator.

Processing the input signals may comprise shifting time series data included in the input data along the time axis based on the time lag of the data, to take into consideration the time lag and/or variations in time lag for different variables (such as air pressure and wind velocity).

Thereby, characteristic lags between changes in a variable (such as a change in air pressure) and a grid outage (which may be delayed as compared to the change in air pressure, as a potentially a seller the segment a situation of occurs only with a time lag after a change in air pressure) may be taken into consideration when determining the at least one grid outage indicator.

The input data may comprise time series data. The time series data may comprise time series data of one or several weather variables, including measurements for the first time period and forecasts for the second time period, and timeseries data of observed grid outages for at least part of the first time period.

Thereby, the dynamics of grid outages as a result of changes in one or several variables that affects a grid outages can be taken into consideration by the processing system and, more specifically, by the data-driven processing technique applied to the input signals obtained from the timeseries data.

The method may comprise communicatively interfacing, by the processing system, with one or several information sources external to an electric power transmission and/or distribution system (such as weather forecast servers) to obtain the values for at least some of the variables.

Thereby, the processing system may automatically retrieve information that may be relevant for the grid outage prediction from existing information sources, by communicatively interfacing with the information sources over, e.g., a communication system that may comprise a wide area network or the internet.

The method may further comprise communicatively interfacing, by the processing system, with a power grid control system (such as a SCADA system of a distribution system or of a transmission system) to obtain timeseries data specifying the number or fraction of customers experiencing outages in at least part of the first time period.

Thereby, the processing system may automatically retrieve information that may be relevant for the grid outage prediction from existing information sources, by communicatively interfacing with the information sources over, e.g., a communication system that may comprise a wide area network or the internet.

According to another aspect of the invention, there is provided a grid control method (such as a distribution grid control method), which comprises the method of performing a grid outage prediction according to an aspect or embodiment. The grid control method may further comprise performing at least one grid control action that affects primary and/or secondary power grid equipment, based on the results of the grid outage prediction.

According to another aspect of the invention, there is provided a generation method of generating a data-driven processing technique for grid outage prediction. The method may be a method of generating the data-driven processing technique for the method of predicting a grid outage according to an aspect or embodiment.

The generation method may comprise obtaining, by a training system, training data. The training data comprises data indicative of values of at least one variable that affects occurrence of grid outages in at least one area. The training data further comprises grid outage data indicative of a number or fraction of customers located in the at least one area and determined to have experienced a grid outage. The generation method may comprise determining, by the training system, a time duration over which the at least one variable needs to be considered to perform the grid outage prediction, wherein the time duration depends on a lagging effect between the occurrence of the grid outages and changes in the at least one variable. The generation method may comprise training, by the training system, the data-driven processing technique, based on the values of the at least one variable that are selected from the training data based on the determined time duration with a training objective of outputting, by the data-driven processing technique, a grid outage indicator that quantifies the number or fraction of the customers determined to have experienced a grid outage.

Thereby, the data-driven processing technique is established based on observations made during field operation of the power grids, providing objective criteria for grid outage prediction. By determining and considering potential lagging effects, which may comprise performing correlation analysis, the generation method may also obtain the time lag data that is useful for the processing system during inference.

The generation method may be operative such that the time duration may but does not need to be adjacent to the time at which, during inference, a grid outage prediction is made.

Thereby, the generation method provides a data-driven processing technique that allows the grid outage prediction to be performed in a versatile manner.

The generation method may comprise providing at least the parameters of the data-driven processing technique (such as the parameters and optionally hyper parameters of a decision tree-based model, such as XGboost) to one or several processing systems for use during inference.

Thereby, the data-driven processing technique is made available for use in power grid control by the at least one processing system.

Additional optional features of the generation method and the effects respectively attained thereby correspond to the features discussed in association with the method of performing a grid outage prediction.

According to a further aspect of the invention, there is provided a method which comprises both the generation method and the method of performing a grid outage prediction.

According to another aspect of the invention, there is provided machine-readable instruction code comprising machine-readable instructions which, when executed by at least one processing circuit, cause the at least one processing circuit to perform the method according to an aspect or embodiment of the invention.

The effects attained by the machine-readable instruction code correspond to the effects disclosed in association with the methods and systems according to various embodiments.

According to another aspect of the invention, there is provided a non-transitory storage medium having stored thereon machine-readable instruction code comprising machine-readable instructions which, when executed by at least one processing circuit, cause the at least one processing circuit to perform the method according to an aspect or embodiment of the invention.

The effects attained by the non-transitory storage medium correspond to the effects disclosed in association with the methods and systems according to various embodiments.

According to another aspect of the invention, there is provided a processing system operative to perform a grid outage prediction. The processing system comprises at least one interface operative to receive input data, the input data being indicative of values of at least one variable that affects occurrence of grid outages in an area, the values comprising values for a first time period preceding a time at which the grid outage prediction is performed and forecast values for a second time period later than the time at which the grid outage prediction is performed. The processing system comprises at least one processing circuit operative to determine at least one grid outage indicator over a predictive horizon. The at least one processing circuit is operative to perform at least the following operations to determine the at least one grid outage indicator: providing, based on the values for the first time period and the forecast values for the second time period, input signals for a data-driven processing technique; and processing, by the processing system, the input signals using the data-driven processing technique, wherein the data-driven processing technique provides the at least one grid outage indicator as an output, wherein the at least one grid outage indicator quantifies a number or fraction of customers in the area predicted to experience a grid outage over the predictive horizon.

Various effects and advantages are attained by the processing system. The processing system is operative to determine and use an indicator that provides a predictive, quantitative representation of the number or fraction of customers expected to experience an outage, given the input data. Thereby, the number of customers expected to experience an outage can be determined predictively in a quantitative manner, which facilitates actions that mitigate effects of the outages and/or help restore power to as many customers as possible in a timely manner. By applying a data-driven approach, the determination is based on objective criteria rather than human operator experience that may be more prone to errors. The processing system further provides the effect of not requiring (while allowing use of) information on the power grid to which it is being applies, and not requiring a pre-classification of its input into indicators for potentially hazardous weather situations.

The at least one processing circuit may be operative to trigger at least one action based on the at least one grid outage indicator. This may be done automatically or semi-automatically.

Thereby, the processing system is operative such that the at least one grid outage indicator is used to automatically or semi-automatically trigger at least one action.

The processing system may be operative to perform the method according to any aspect or embodiment disclosed herein.

Optional features of the processing system that may be implemented in embodiments and the effects attained thereby correspond to the optional features discussed in association with the methods herein.

According to another aspect of the invention, there is provided a power grid control system (such as a distribution grid control system, which comprises the processing system according to an aspect or embodiment. The power grid control system may be operative to perform at least one grid control action that affects primary and/or secondary power grid equipment, based on the results of the grid outage prediction.

Embodiments of the invention provide enhanced techniques of predicting grid outages in a quantitative manner. The methods and processing systems that allow indicators that quantifies a number or fraction of customers affected by expected grid outages to be predicted, given time series data specifying values of one or several variables and/or other variables that can affect the likelihood of grid outages occurring. The methods and processing systems used objective criteria for determining the grid outage indicator, by employing a data-driven processing technique to process input signals.

The methods and processing systems are particularly useful in association with power grids (such as distribution grids) having renewables penetration, without being limited thereto.

### BRIEF DESCRIPTION OF THE DRAWINGS

Embodiments of the invention will be described with reference to the drawings in which similar or identical reference signs designate elements with similar or identical configuration and/or function.
Fig. 1 is a schematic representation of a processing system operative to perform a grid outage prediction.
Fig. 2 is a schematic representation illustrating operation of a data-driven processing technique in the processing system.
Fig. 3 is a schematic representation illustrating operation of the data-driven processing technique in the processing system.
Fig. 4 is a schematic representation illustrating operation of the data-driven processing technique in the processing system.
Fig. 5 is a schematic representation of illustrating operation of the data-driven processing technique in the processing system.
Fig. 6 is a flow chart of a method of performing a grid outage prediction.
Fig. 7 is a flow chart of a process that may be used in the method of performing a grid outage prediction.
Fig. 8 is a schematic representation illustrating operation of the processing system.
Fig. 9 is a flow chart of a process that may be performed by the processing system.
Fig. 10 is a flow chart of a process that may be performed by the processing system.
Fig. 11 illustrates explainability data that may be obtained in the method and/or by the processing system.
Fig. 12 is a flow chart of a method of performing a grid outage prediction.
Fig. 13 shows prediction results in comparison with actual observations for a one hour prediction horizon.
Fig. 14 shows prediction results in comparison with actual observations for a 24-hour prediction horizon.
Fig. 15 is a schematic representation of a system comprising the processing system.
Fig. 16 is a schematic representation of an electric power system comprising the processing system.
Fig. 17 is a schematic representation of an electric power system comprising the processing system.
Fig. 18 is a flow chart of a method that comprises a generation of the data-driven processing technique and its use during inference.
Fig. 19 is a flow chart of a data preprocessing procedure that may be performed in the training method.
Fig. 20 is a flow chart of a procedure that may be performed in the training method.
Fig. 21 is a schematic representation of training data.
Fig. 22 is a schematic representation illustrating the process of generating the data-driven processing technique.
Fig. 23 is a schematic representation illustrating a decision-tree based data-driven processing technique.
Fig. 24 is a flow chart of a control method that comprises the grid outage prediction.

### DETAILED DESCRIPTION OF EMBODIMENTS

Embodiments of the invention will be described with reference to the drawings. In the drawings, similar or identical reference signs designate elements with similar or identical configuration and/or function.

Embodiments relate to methods and processing systems useful for quantitatively predicting a number or fraction of customers (i.e., consumer nodes) of an electric power grid that are expected to experience an outage, given a prediction of at least one variable that affects the likelihood of grid outages (such as one or several weather variables).

As used herein, "grid" refers to an electric power grid. The term "grid" encompasses a distribution grid and a transmission grid, unless specifically stated otherwise.

As used herein, a "customer" of the power grid refers to a consumer node of the grid. The customers may comprise residential, industrial, or infrastructure consumer nodes.

As used herein, a "fraction" of customers predicted to experience an outage refers to the number of such customers in an area, divided by the overall number of customers in the area. The terms "number" and "fraction" are also used somewhat interchangeably, as a conversion is readily possible using the total number of customers, which is known at the DSO side.

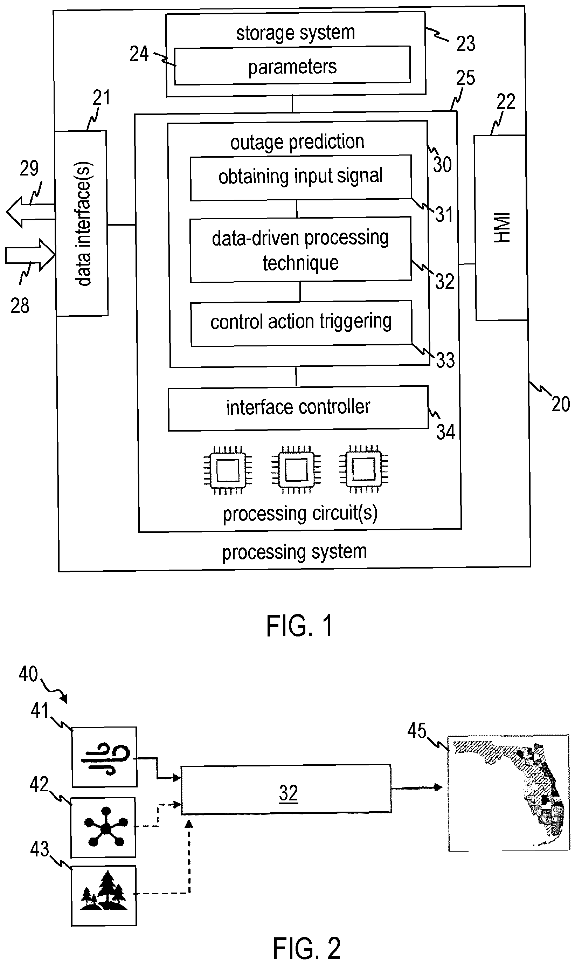

Fig. 1 shows a schematic representation of a processing system 20 operative to perform a grid outage prediction. The processing system 20 comprises at least one interface 21 operative to receive input data 28. The input data 28 may comprise time series of one or several variables for an area for which the grid outage prediction is to be performed. The input data 28 may comprise both measurements for a time period in the past and forecast for another time period in the future, with the terms "past" and "future" being respectively taking relative to the time at which the outage prediction is being performed.

The measurements for the past and the forecast values for the future are values that relate to a same variable or to several variables, but for different time intervals. In other words, the values for the past and the forecast values for the future comprise values of a variable for a first time period in the past and the forecast values of the same variable for a second time period in the future. The values for the first time period and the forecast values for the second time period may optionally comprise values of at least one further variable for the first time period and the forecast values of the same at least one further variable for the second time period.

The input data 28 may also comprise observations for grid outages in at least part of the time period in the past. The processing system 20 may comprise an HMI 22. The processing system 22 may comprise a storage system 23 or may be operative to communicatively interface with the storage system 23. The storage system 23 has stored therein parameters 24 that define a data-driven processing technique 32. The parameters 24 may comprise parameters of a decision tree-based AI model, such as XGboost, without being limited thereto. The parameters 24 may further comprise time lag data specifying, for different types of variables that affect grid outages, characteristic time lags between changes in the respective variable and grid outages, as determined using a correlation analysis.

The processing system 20 comprises at least one processing circuit 25. The at least one processing circuit 25 is operative to perform an outage prediction 30. The at least one processing circuit 25 is operative to implement a module 31 for providing input signals for the data-driven processing technique. The module 31 is operative to provide, based on the input data 28, the input signals for the data-driven processing technique 32. The at least one processing circuit 25 is operative to process the input signals by applying the data-driven processing technique 32 thereto. The output of the data-driven processing technique 32 is a quantitative indicator specifying a fraction and/or number of customers in an area expected to experience a power outage over a predictive time horizon, given the forecast variables for at least the predictive time horizon.

The at least one processing circuit 25 may optionally be operative to perform a control action triggering 33, responsive to the output of the data-driven processing technique 32. The control action triggering 33 may be operative to cause at least one action in dependence on the output of the data-driven processing technique 32. The at least one action may comprise an interface control action to provide information on the expected future grid outages via the HMI 22. Alternatively or additionally, the at least one action may comprise a control action or other action that is operative to mitigate the adverse effects of the expected future grid outages and/or that help in restoring the power to as many affected customers is possible in an efficient manner. The at least one processing circuit 25 may be operative to implement an interface controller 34. The interface controller 34 may be operative to control the HMI 22 to output information related to the predicted grid outages. Alternatively or additionally, the interface controller 34 may be operative to control the at least one data interface 21 to output one or several control commands 29 to cause the action to be performed.

To perform the mentioned operations, the at least one processing circuit 25 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto. The at least one processing circuit 25 may be specifically at or to perform the processing of the input signals to the data-driven processing technique 32 using a dedicated circuitry, such as a graphical processing unit (GPU) or several GPUs, a tensor processing unit (TPU) or several TPUs, or other circuitry specifically adapted to execute the data-driven processing technique 32.

Fig. 2 is a schematic representation that illustrates operation of the data-driven processing technique 32. The data driven processing technique 32 receives input signals collectively designated by reference numeral 40. The input signals 40 comprise values for one or several variables, e.g., in the form of timeseries data. The variables influence the probability of grid outages. The input signals 40 may comprise at least one input signal 41 obtained from or comprising timeseries whether data, such as one or several time series of wind speed, temperature, precipitation, etc.. The input signals may comprise additional optional signals input signals, such as an input signal 42 that is dependent on the power grid data and/or an input signal 43 that specifies characteristics of the area (such as terrain type, terrain incl for which the grid outage prediction is performed. The input signals 40 may comprise, for at least some of the variables, the respective values both for a time period preceding the time at which the grid outage prediction is performed (such as a time period of range of hours to days preceding the time at which the grid outage prediction is performed) and a forecast time period immediately following the time at which the grid outage prediction is performed. The time period preceding the time at which the grid outage prediction is performed may be a time period that extends up to and/or immediately precedes the time at which the grid outage prediction is performed. The input signals 40 may respectively have the form of time discrete data, being available for discrete timestamps only.

The data-driven processing technique 32 processes the input signals 40 and provides, as output, a grid outage indicator that specifies the number or fraction of customers predicted to experience a power outage over the predictive time horizon in the future and in the area to which the input signal 40 processed by the data-driven processing technique 32 relates. The data-driven processing technique 32 may be applied consecutively or in parallel to the input signals for different ones of several areas, thereby determining the grid outage indicator for each of several distinct areas. Thereby, the at least one grid outage indicator may be determined in a spatially resolved manner, as schematically indicated for the spatially resolved grid outage indicator 45 in Fig. 2.

Thus, during the inference phase, real-time input data is fed to the trained data-driven processing technique 32 in order to predict the number of customers without power.

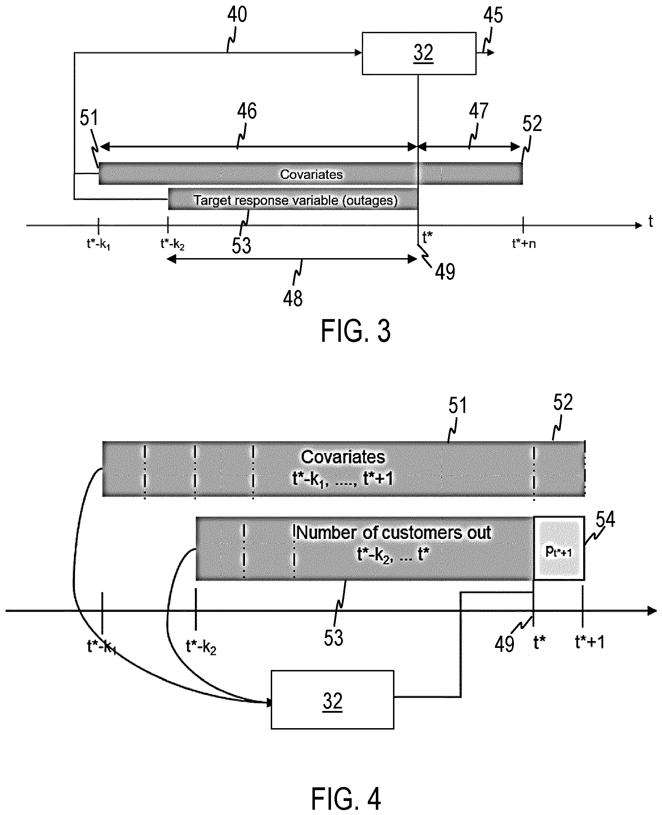

As shown in Fig. 3, the real-time input data includes the close-to-real-time historical data 51 over a first time period 46 (dependent on time lag(s) k₁ that may be determined during model training for the respective variables), observations of a number or fraction of the power grid outages 53 over at least a part 48 of the first time period 46 (dependent on a time lag k₂ that may be determined during model training for the respective variables), and the forecasts 52 of the covariates i.e., of those variables determined to be important for determining the grid outage prediction, for a second time period 47. The second time period 47 may be equal to or greater than the predictive horizon.

The first time period 46 and/or the second time period 47 may be immediately adjacent to the time at which the prediction is made. I.e., the first time period 46 may extend to the time at which the prediction is made and/or the second time period 47 may extend from the time at which the prediction is made. In other implementations, the first time period and/or the second time period need not be immediately adjacent to the time at which the prediction is made. Thereby, the grid outage prediction can be performed in a versatile manner.

If the model is predicting at timestamp t*, as indicated by reference signs and 49, the input data may comprise historical outage data for the timestamps t*-k₂, ...t* (k₂ ≥ 0) and covariates for the timestamps t*-k₁, ...t* (k₁ ≥ 0). The data-driven model predicts one or multiple steps ahead depending on the chosen prediction horizon, i.e., it returns a prediction for the number of customers out for timestamps from t* to t*+n. Here, n designates the number of time steps over which a prediction is made. In case scaling was used during training, the predicted values are inverse transformed accordingly.

Fig. 4 illustrates operation of the data-driven processing technique 32. The data-driven processing technique 32 receives input signals that comprise or are otherwise based on measurements 51 of at least one variable that is external to the power grid that affects power grid outages, for costs 52 of the at least one variable, and observations 53 of the power grid outages that have already occurred. The processing technique 32 outputs a prediction 54 for the number or fraction of power grid outages 1 step ahead.

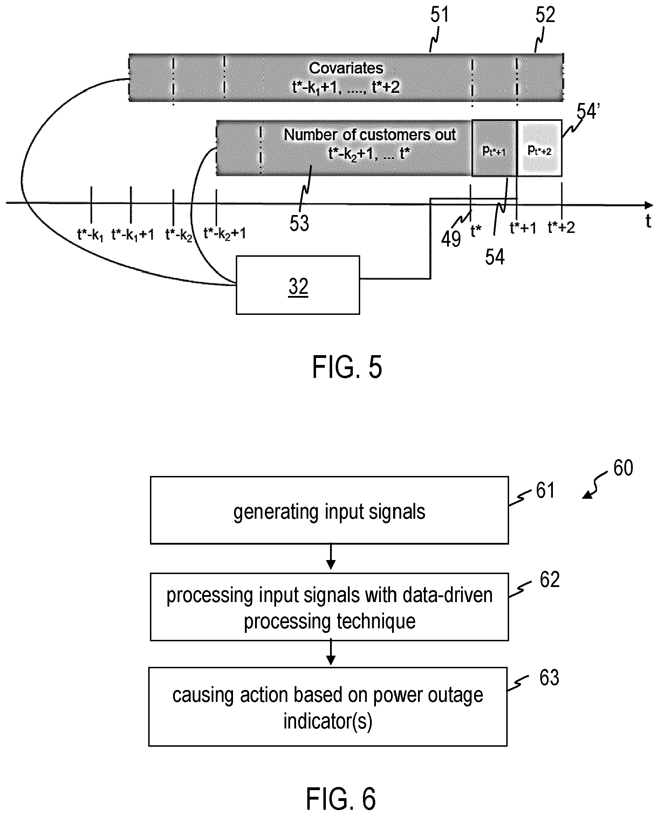

Fig. 5 is a schematic representation that illustrates operation of the data-driven processing technique 32 when a multi-step ahead prediction is made, for outage prediction at time *t** for the prediction horizon of *t*+n.*

It is important to note that even in case the data-driven processing technique 32 as formulated to predict only one-step predictions, it is still possible to predict multiple steps without retraining the data-driven processing technique 32. A multiple-step ahead prediction (e.g., 24-hours ahead) can be provided via a rolling-window approach, where the data-driven processing technique 32 first returns a one-step prediction, and is then applied sequentially to the predicted value to obtain the following ones. Fig. 5 shows an illustration of the rolling-window approach in more details: At timestamp t*, the data-driven processing technique 32 is applied on the historical number of customers out of the timestamps t*-k₂,..., t* and the covariates t*-k₁, ..., t*. This yields the prediction p_{t*+1} for the number of customers out at timestamp t*+1 (designated by reference numeral 54 in Fig. 5). In order to provide a 2-step ahead prediction, the data-driven processing technique 32 is applied on the number of customers out t*-k₂+1, .. t* augmented by the prediction p_{t*+1} and the covariates t*-k₁+1, ..., t*+1 if the covariates are available into the future (in case of unavailability, a prediction can be used). Applying the model on this shifted input data yields the prediction p_{t*+2} for timestamp t*+2 (designated by reference numeral 54 in Fig. 5). By applying this procedure iteratively, the processing system 32 is operative to obtain a prediction for the number or fraction of customers predicted to have a power outage for timestamp t*+n, where n can be any positive integer larger or equal 1.

Fig. 5 illustrates such a multi-step ahead prediction using the one-step trained data-driven processing technique 32 and the rolling-window approach. As explained, the prediction p_{t*+1} is concatenated to the shifted historical number of customers experiencing an outage to predict the number of customers out for the next timestamp, i.e., p_{t*+2}. The covariates are shifted accordingly.

Fig. 6 is a flow chart of a method 60 of performing a grid outage prediction. The method 60 may be performed automatically by the processing system 20.

At process block 61, the processing system 20 provides input signals for a data-driven processing technique. Providing the input signals may comprise selecting a part of timeseries data indicating values for at least one variable that affects the likelihood of grid outages, with the at least one variable representing a quantity external to the power grid and different from a power grid variable. Providing the input signals may optionally comprise generating the input signals for the data-driven processing technique based on existing observations of power grid outages for the area for which the grid outage prediction is to be performed.

At process block 62, the processing system 20 applies the data-driven processing technique to process the input signals. The data-driven processing technique provides, as output, a quantitative indicator for the number or fraction of customers expected to experience a power outage, considering both the history and the forecast of the values for the at least one variable and the history of the outage data.

At process block 63, the processing system 20 causes at least one action to be performed based at least on the power outage indicator, which quantifies the number or fraction of customers expected to experience a power outage. The at least one action may comprise an output action that outputs information related to the at least one grid outage indicator via an interface. Alternatively or additionally, the at least one action may comprise a grid control action. Alternatively or additionally, the at least one action may comprise a restoration action that helps restore power to customers affected by grid outages.

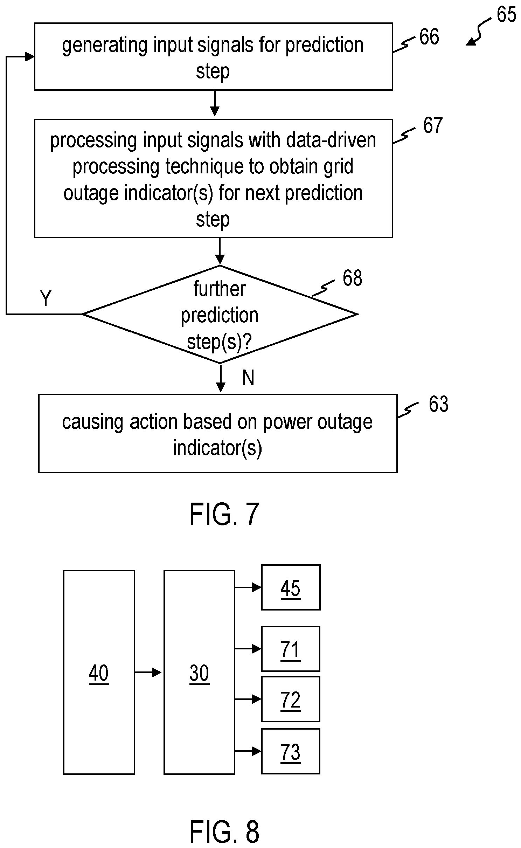

Fig. 7 is a flow chart of a method 65 of performing a grid outage prediction. The method 65 may be performed automatically by the processing system 20.

At process block 66, the processing system 20 may provide input signals for a prediction step performed using the data-driven processing model 32. In an initial iteration, the input signals may be obtained as previously explained with reference to Fig. 3, Fig. 4, Fig. 5, and Fig. 6.

At process block 67, the processing system 20 processes the input signals with the data-driven processing technique 32 to obtain grid outage indicators. The grid outage indicators can be used for an iteration, as explained with reference to Fig. 5.

At process block 68, the processing system 20 determines whether any for the prediction steps are to be performed. Determining whether any additional prediction steps are to be performed may comprise determining whether the most recent iteration has already reached the end of the predictive horizon, over which forecast for the values of the at least one variable are available. Alternatively or additionally, determining whether any additional prediction steps are to be performed may comprise determining whether a number of ordered to perform protection steps is reached threshold that may be configurable by an operator. If additional prediction steps are to be performed, the method returns to process block 66. In any but the initial iteration, providing the input signals for the prediction step may comprise providing the input signals taking into consideration the grid outage indicators previously determined at process block 67 in the preceding iterations.

At process block 63, if no additional iterations are to be performed, at least one action is caused to be performed by the processing system 20. Process block 63 may be implemented as previously explained with reference to Fig. 6.

The processing system 20 and the method of performing a grid outage prediction may be operative to provide data in addition to the quantitative indicator for the number or fraction of customers expected to experience a grid outage. The additional data may comprise data useful for assessing the quality of the prediction. The additional data may alternatively or additionally comprise data useful for verifying the plausibility and or quantitatively assessing the influence of different variables on the determined prediction result. Such additional data is useful both for automatic or a semiautomatic control actions, and for use by an operator.

Fig. 8 schematically illustrates operation of the processing system and the method of performing a grid outage prediction, in which the processing system 30 is operative to process input signals 40 to provide the grid outage prediction 45. The processing system 30 may provide additional data, such as any one, any combination, or all of an uncertainty 71 (which may be provided as a further output by the data-driven processing technique 32 itself), explainability data 72, a trustworthiness data 73.

The uncertainty, explanation and trustworthiness data 71-73 are optional features that are applied either on a single step prediction as illustrated in Fig. 4 or on a predicted period that may comprise several prediction steps.

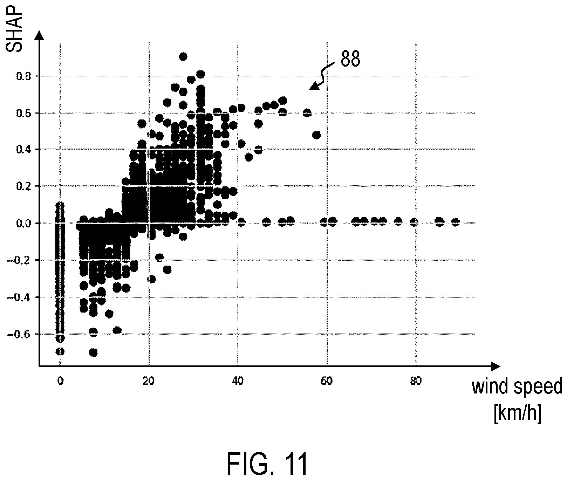

These optional features, the explainability, the uncertainty and the trustworthiness data 71-73 can be used independently from each other, and can be activated separately or at the same time.
(1) **Explainability:** The explainability data 71 indicates how the specific prediction at timestamp t*+n has been made. More precisely, it gives a quantification of how much a specific feature contributed to the particular prediction. The techniques disclosed herein allow the importance to be quantified locally (both for a single predictions or a specific time period) as well as globally. For this, a model-agnostic explainable AI metric can be used. SHAP (Shapley Additive exPlanations) values are an example, which are generally discussed in S. M. Lundberg and S.-I. Lee, "A Unified Approach to Interpreting Model Predictions," Advances in Neural Information Processing Systems 30, pp. 4765-4774, 2017. The techniques disclosed herein is not limited to SHAP values and also works for other local model-agnostic explanation methods.
(2) **Uncertainty:** The uncertainty data 72 measures how certain the data-driven processing technique 32 is about the specific prediction at timestamp t*+n. This can be either a quantitative assessment, for example via prediction intervals/bands or a qualitative assessment like a categorical flag to indicate if a similar behavior was observed in historical data. For quantitative assessment, different approached can be used, e.g., conformal predictions or training the model as a quantile regression method.
(3) **Trustworthiness:** The trustworthiness data 73 specifies how trustworthy a prediction is with respect to its similarity to the training data. For this, the most important prediction features are compared to the feature space of the training data. The most important features can be derived either by the explainability feature (e.g., by SHAP values) or any other suitable method (e.g. by identifying the most important features in the training set during extreme events or during usual weather conditions). More specifically, a trustworthiness score can be computed by calculating a distance (e.g., the Mahalanobis distance) from the most explanatory features of the prediction to the feature space of the training data. If the distance is high, the data-driven algorithm has not seen a similar data point during the training phase and the trustworthiness score of the prediction is low. In contrast, if the distance is very low, the data-driven algorithm has already seen a similar data point in the training set and the trustworthiness score is high. The technique disclosed herein is not limited to distance-based similarity - other similarity assessment methods can also be used. Furthermore, the feature can be applied in conjunction with the explainability feature or independently, depending on how the reference feature space is built. Fig. 11 shows an illustration of the trustworthiness data in the form of correlations of wind speeds and SHAP values.

The processing system and method of performing a grid outage prediction may be operative to use not only the grid outage indicator determined using the data-driven processing technique 32, but also the uncertainty and/or the trustworthiness to determine which action is to be performed and cause performance of the respective action.

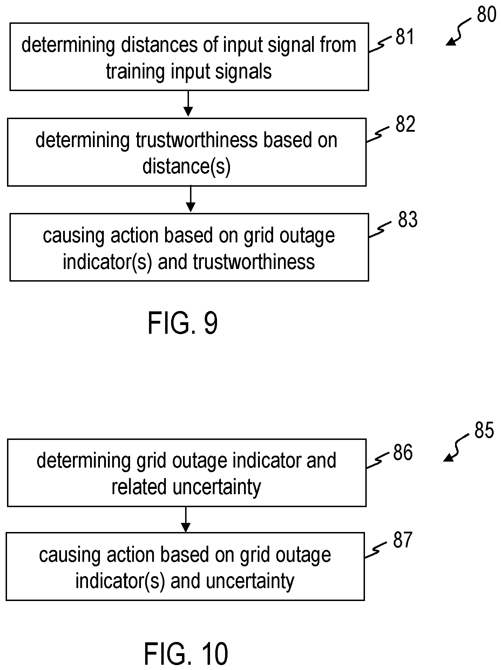

Fig. 9 is a flow chart of a process 80 of determining and using trustworthiness. The process 80 may be used in the method of performing a power grid outage prediction, such as one of the methods 60, 65. The process 80 may be performed automatically by the processing system 20.

At process block 81, the processing system 20 calculates a distance (e.g., the Mahalanobis distance) from the most explanatory features of the prediction to the feature space of the training data.

At process block 82, the processing system 20 determines that trustworthiness based on the calculated distances. For illustration, the trustworthiness may be determined based on the minimum of all distances calculated at process block 81. If the distance is high, the data-driven algorithm has not seen a similar data point during the training phase and the trustworthiness score of the prediction is low. In contrast, if the distance is very low, the data-driven algorithm has already seen a similar data point in the training set and the trustworthiness score is high.

At process block 83, the processing system 20 causes an action to be performed based on the at least one grid outage indicator and further based on the trustworthiness determined at process blocks 81 and 82.

Fig. 10 is a flow chart of a process 85 of determining and using uncertainty. The process 85 may be used in the method of performing a power grid outage prediction, such as one of the methods 60, 65. The process 85 may be performed automatically by the processing system 20.

At process block 81, the processing system 20 determines an uncertainty of the grid outage indicator. The uncertainty may be an inherent output of the data-driven processing technique, for example, when the data-driven processing technique has several output nodes, indicating the probability or probabilities for the grid outage indicator having any one or several values. Alternatively or additionally, the processing system 20 may use conformal predictions or training the data-driven processing technique 32 as a quantile regression method.

At process block 87, the processing system 20 causes an action to be performed based on the at least one grid outage indicator and further based on the uncertainty.

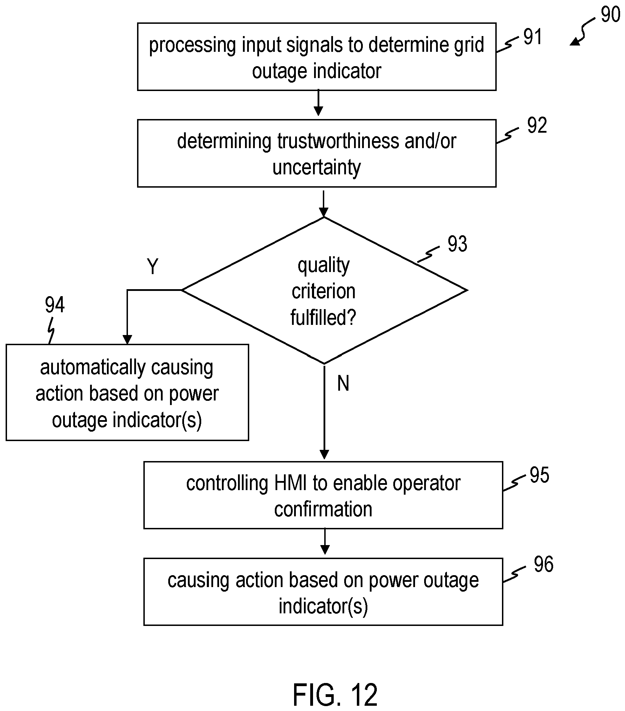

Fig. 12 is a flow chart of a method 90 of performing grid outage prediction. The method 90 may be performed automatically by the processing system 20.

At process block 90 one, the processing system 20 processes the input signals using the data-driven processing technique 32 to determine the at least one grid outage indicator, which provides a quantitative indicator of a number or fraction of customers in an area predicted to experience a grid outage over a predictive horizon.

At process block 92, the processing system 20 determines one or both of trustworthiness and/or uncertainty for the predicted grid outage indicator.

At process block 93, the processing system 20 determines whether the prediction fulfills a quality criterion, based on one or both of the trustworthiness and/or the uncertainty. The verification at process block 93 may comprise performing a threshold comparison on the trustworthiness and/or performing a further threshold comparison on the uncertainty.

At process block 94, if the quality criterion is fulfilled, the processing system 20 may cause a control action to be automatically performed. The control action may comprise a control action acting on primary and/or secondary system equipment, such as a control action that has the potential of mitigating adverse effects of the outage is predicted to occur.

At process block 95, if the quality criterion is not fulfilled, the processing system 20 may control the HMI 22 to enable an operator confirmation that a control action is to be performed. At process block 96, responsive to the operator confirmation, the processing system 20 triggers the action.

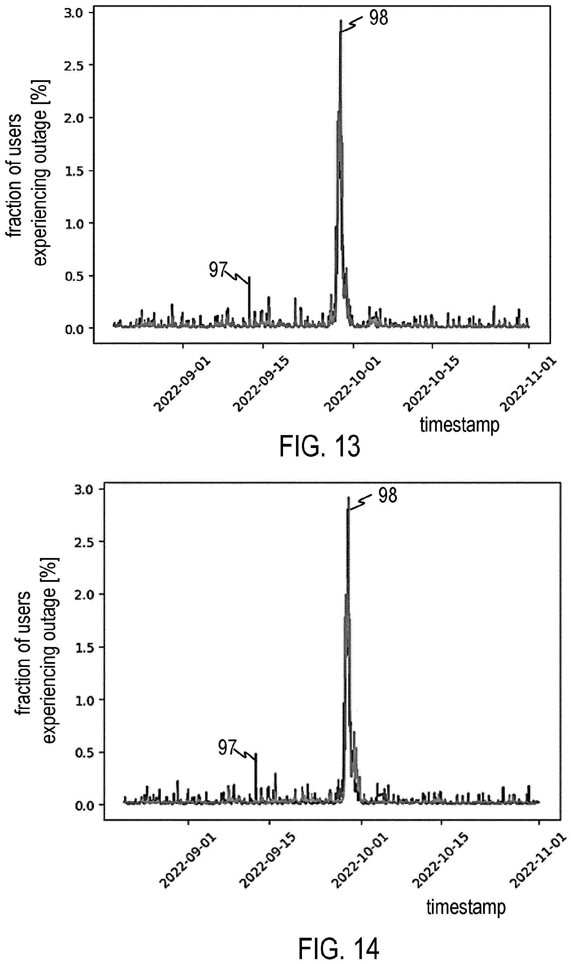

Fig. 13 and Fig. 14 show prediction results as compared to actually observed outages. The prediction results are respectively shown in curves 97. The actually observed outages are shown respectively in curves 98. The prediction was obtained based on values for variables comprising whether data including wind speed. Fig. 13 shows the results of a one-hour-ahead prediction. Fig. 14 shows the results of a 24-hours-ahead prediction. As can be seen in Fig. 13 and Fig. 14, while there are some differences in a particular when the number of outages is low, the techniques disclosed herein correctly predicts the significant increase in outages observed herein, including its variation, based on the data-driven processing technique.

To perform the various operations disclosed herein, the processing system 30 may be operative to communicatively interface with other systems or devices.

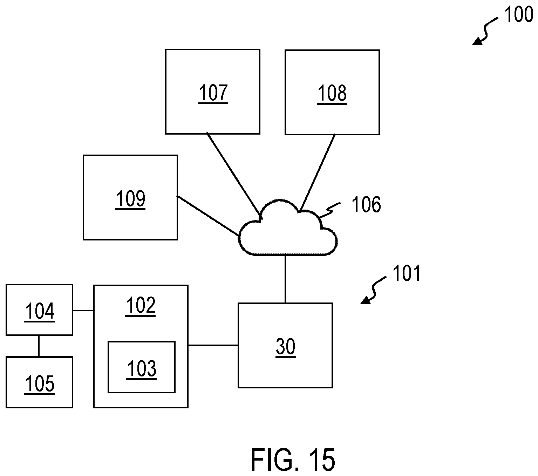

Fig. 15 is a schematic representation of a system 100. The system 100 comprises an electric power system 101. The electric power system 101 comprises an electric transmission and/or distribution system having primary equipment 105 and secondary equipment 104. The electric power system 101 comprises a control system 102. The control system 102 may comprise a control system installed in a control room or control center of, e.g., a distribution grid. The control system 102 may comprise an HMI 103. The processing system 30 may be integrated in the control system 102 or may be operative to communicatively interface with the control system 102. The processing system 30 may be operative to communicatively interface with the control system 102 to obtain the number or fraction of already observed outages, for use in providing the input signals for the data-driven processing technique 32.

The processing system 30 may be operative to communicatively interface, over a communication system which may comprise a wide area network (WAN) 106 and/or a cellular network, with additional information sources different from and potentially external to the electric power system 101.The additional information sources may comprise one, several, or all of: a weather data server 107 operative to provide weather observations and forecasts; a solar activity server 108 operative to provide solar activity observations and forecasts; a wildfire data server 109 operative to provide wildfire observations and forecasts.

The processing system 30 may be operative to use the additional data, comprising values for at least one variable that affect the likelihood of outages, as obtained from the additional information sources to provide the input signals for the data-driven processing technique 32.

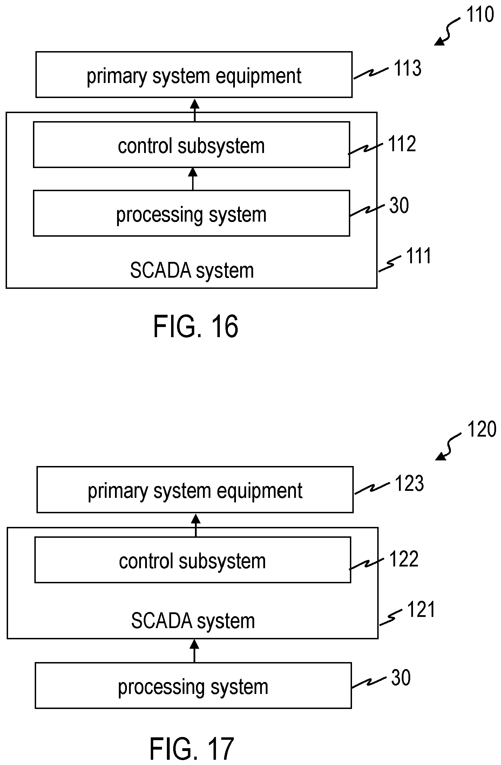

Fig. 16 shows a schematic representation of an electric power system 110 according to an embodiment. The electric power system 110 may be a power distribution system. The electric power system 110 comprises primary system equipment 113 and a SCADA system 111. The SCADA system 111 comprises the processing system 30 and a SCADA control subsystem 112 communicatively interfaced with the processing system 30. The SCADA control subsystem 112 is operative to perform control actions responsive to output provided by the processing system 30. The control actions may be dependent on the grid outage indicator(s) and, if determined, the trustworthiness and/or uncertainty.

Fig. 17 shows a schematic representation of an electric power system 120 according to an embodiment. The electric power system 120 may be a power distribution system. The electric power system 120 comprises primary system equipment 123 and a SCADA system 121. The SCADA system 121 comprises a SCADA control subsystem 122. The SCADA system 121 is communicatively interfaced with the processing system 30 (e.g., the processing system 30.1 or the processing system 30.3). The SCADA control subsystem 122 is operative to perform control actions responsive to the output 69 provided by the processing system 30. The control actions may be dependent on the grid outage indicator(s) and, if determined, the trustworthiness and/or uncertainty.

Features that may be used in association with the generation of the data-driven processing technique 32 will be explained in more detail next.

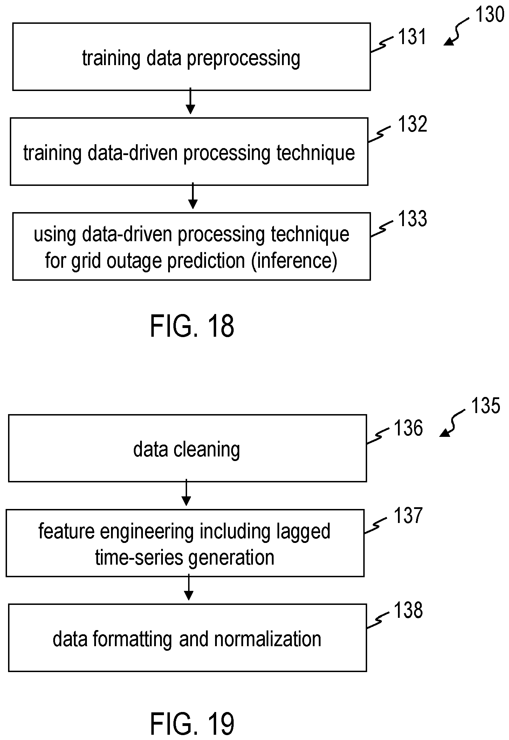

Fig. 18 is a flow chart of a method 130. The method 130 may be performed automatically by the processing system 20 or by a system that comprises both the processing system 20 and a computing system operative to generate the data-driven processing technique 32, e.g., by determining parameters of the data-driven processing technique 32.

At process block 131, training data are preprocessed. The training data may be obtained by the processing system 20 or the computing system that performs the training from a data repository. The training data comprises a timeseries data specifying one or several variables that affect the likelihood of grid outages and observed grid outages, respectively as a function of time. The training data may but does not need to be obtained for the same area for which the data-driven processing model is applied during inference.

At process block 132, the data-driven processing technique is trained using the training data that was previously preprocessed. The training may comprise a supervised training. The training may be performed with an objective of minimizing the summed square of the deviation of the model output from the actual observed number or fraction of customers experiencing outages.

At process block 133, the data-driven processing technique is applied during inference to perform the grid outage prediction. Process block 133 may be implemented as described previously herein.

More than one data-driven processing technique may be trained and provided to the processing system 20 for use during inference. For illustration, several data-driven processing techniques may be trained, each of which is useful in association with different types of variables that are available as input data. The processing system 20 may then select the most appropriate one of the several data-driven processing techniques for use during inference, depending on, e.g., the available variables and/or characteristics of the use case for which the processing system 20 is to determine the number or fraction of customers predicted to experience an outage.

Fig. 19 is a flow chart of a process 135 of training data preprocessing. The process 135 may be performed automatically by the processing system 20 or the computing system that performs the training.

At process block 136, in the data cleaning phase, the training data may be brought to the same resolution, e.g., on an hourly resolution, with potential data gaps being interpolated. Other missing data replacement techniques may be used, such as hard imputation.

At process block 137, the variables (such as the weather variables) used as input signals for the data-driven processing technique are selected in a feature engineering phase. Lagged features may be created from the time-series data, and added to the original data.

At process block 138, the training data can be scaled, e.g., by Min/Max-scaling.

The preprocessing of the training data may also comprise a determination of a relevant time horizon, i.e., a determination of the time period for which historical variable values should be known in order to perform the grid outage prediction.

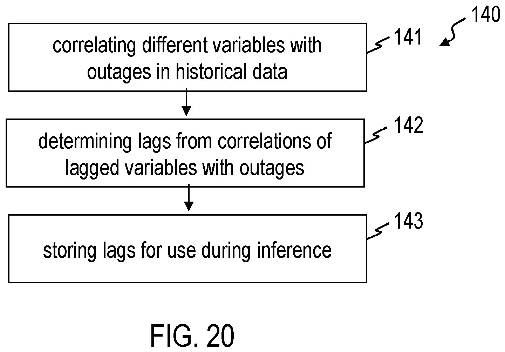

Fig. 20 is a flow of a process 140 of determining relevant time horizons (or lags). The process 140 may be performed automatically by the processing system 20 or the computing system that performs the training.

At process block 141, different variable time series are correlated with outages as included in the training data.

At process block 142, based on the correlations, the lags are determined. The lags specify, generally speaking, the temporal delay between a change in a variable and the number or fraction of outages caused thereby. The lag can be determined from correlations. The lag is used not only during training but can also be used during inference, to determine the number of timeseries elements that need to be considered to perform the grid outage prediction.

At process block 143, the lag(s) is/are stored for use during inference. The lag(s) may be provided to the processing system 20, either as explicit values or as inherent parameters of the data-driven processing technique 32 (e.g., by specifying the number of matrix elements of the input of the data-driven processing technique 32).

Implementations of these various operations will be explained in more detail below with reference to exemplary variables, it being understood that the techniques disclosed herein are not limited thereto.

### Data cleaning

The techniques disclosed herein may use historic weather and outage data as an input to a ML training phase for a geographical region of interest:
- **Weather data:** Historical data from at least one weather measurement station may be used. The minimum set of weather variables includes temperature (in °C), precipitation (in mm) and wind speed (in km/h or m/s). Additional weather variables can be included if available, e.g., wind direction (in 0-360 degrees), relative humidity (in %) or air pressure (in hPa). The resolution of the input data should coincide with the desired resolution for the output prediction. For instance, if hourly predictions are desired, the input data should also be on an hourly resolution (or higher resolution in minutes/seconds). In general, the proposed approach is agnostic to the location of the weather station. However, if available, it is recommended to use the data from weather stations inside the observed geographical area, e.g., weather station closest to the population-density center of the area. If data is available from multiple weather stations inside the area, all of them can be used as individual inputs.
- **Outage data:** Historical outage data is needed from the same observed geographical area where the weather data is collected from. The outage data can be collected either in the format of absolute number of customers without power or a relative percentage of customers without power (0-100%). The time resolution of the outage data should match the resolution of the weather data.
- **Optional grid and terrain data:** Historical grid and terrain data can optionally be included from the same observed geographical area where the weather and outage data are collected from. Such data can include, but is not limited to, total length of overhead/underground distribution lines, number of single-phase/three-phase distribution transformers, total length of transmission lines, and various vegetation indices (e.g., percent of area covered in vegetation and/or building development, percent of trimmed trees, etc.).
After collecting the necessary input data, data cleaning is performed. Data cleaning may comprise:
- Finding the missing values within the input data. After finding the missing values, two data cleaning approaches can be taken: (1) deleting the corresponding timestamps from the whole input data set, or (2) using interpolation schemes to get equidistant timestamps, e.g., by using linear interpolation or backward/forward-filling.
- Optionally, the data cleaning may comprise denoising the input data using various approaches such as rolling window averaging, convolution or filtering, depending on the visual data inspection and data quality.
- Optionally, the data cleaning may comprise transforming the cyclic variables to ensure uniqueness. For instance, the wind direction can take values from 0 to 360 degrees, and the interpretation of the value 0 coincides with the value of 360 degrees. To reflect cyclicity, different encoding methods can be used including sine and cosine encoding, where the original variables are replaced with their sine and/or cosine transformation.
- Optionally, the data cleaning may comprise oversampling. To make the data more balanced, an oversampling strategy can be applied. This can result in more stable predictions for some data-driven methods. For instance, SMOTE (synthetic minority oversampling technique) can be applied, as disclosed in N. Chawla, K. Bowyer, L. Hall and W. Kegelmeyer, "SMOTE: synthetic minority over-sampling technique," Journal of artificial intelligence research, vol. 16, pp. 321-357, 2002.

### Feature engineering

In the feature engineering phase, the input signals to train the model are selected by the system that performs the training. The feature engineering may include:
- Selecting covariates: Selection of covariates includes selecting the weather variables to be used as input signals as well as their lags, i.e., the historical horizon considered for the covariates (as explained with reference to Fig. 20). The covariates are chosen using correlation analysis to identify the most relevant features. The correlation analysis also includes correlating the lagged weather variables as there might be a delay of the weather effect on the target variable. In addition, the correlation analysis can include additional covariates such as grid asset data or terrain data if available. To deal with highly imbalanced data, it is proposed to use the Spearman's correlation coefficient for the correlation analysis. However, the selection is not limited to using only the Spearman's correlation coefficient, and any other correlation metric can be used.
- Selecting seasonal information: Optionally, seasonal information such as month of the year of time of the day can be used as additional input signals. The relevance of seasonal information can be investigated using different statistical methods. For instance, boxplots can be used to visually inspect the seasonal information against the (logarithmic) value of the target variable. Since the seasonal information is a cyclic variable, sine/cosine transformation should be applied beforehand as described in the previous section.
- Selecting lags for the target response variable: The historical horizon considered for the target output, i.e., customers without power, can be determined. For this, one potential method is using the partial autocorrelation analysis which measures the degree of association between its own lagged values.

The order of the aforementioned tasks is not relevant, i.e., the tasks can be performed independently from each other.

### Training data formatting and scaling

After data cleaning and feature engineering, the multivariate input time series of historical meteorological data and outage data is preprocessed into a matrix format.

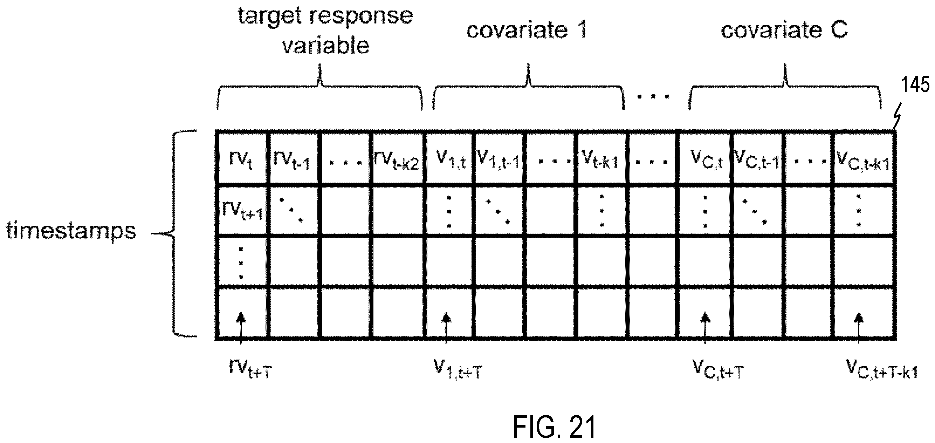

Fig. 21 illustrates the transformed time series data 145 used as input to the machine learning training phase. Here, k₁ represents the lag of meteorological data, and k₂ represents the lag of the target variable (i.e., historical outage data). For prediction timestamp t*, k₁ timestamps of lagged weather data (e.g., var₁, var₂, etc.) and k₂ timestamps of lagged outage data prior to the timestamp t* are used as the input features. In case cyclic or static information is used, these are added as static covariates without lags (e.g., covar₁, covar₂, ...). The machine learning method is then trained using the constructed input matrix as input features, and the outage data at timestamp t* as the target response variable.

After the input data matrix has been constructed, the data is normalized and rescaled, for instance to have zero-mean value and range [-1,1]. This step can be completed using different normalization and scaling techniques such as Min-Max scaling, logarithmic scaling and z-score scaling. This step is not necessary, but is recommended to increase the overall accuracy since machine learning methods work best with scaled data.

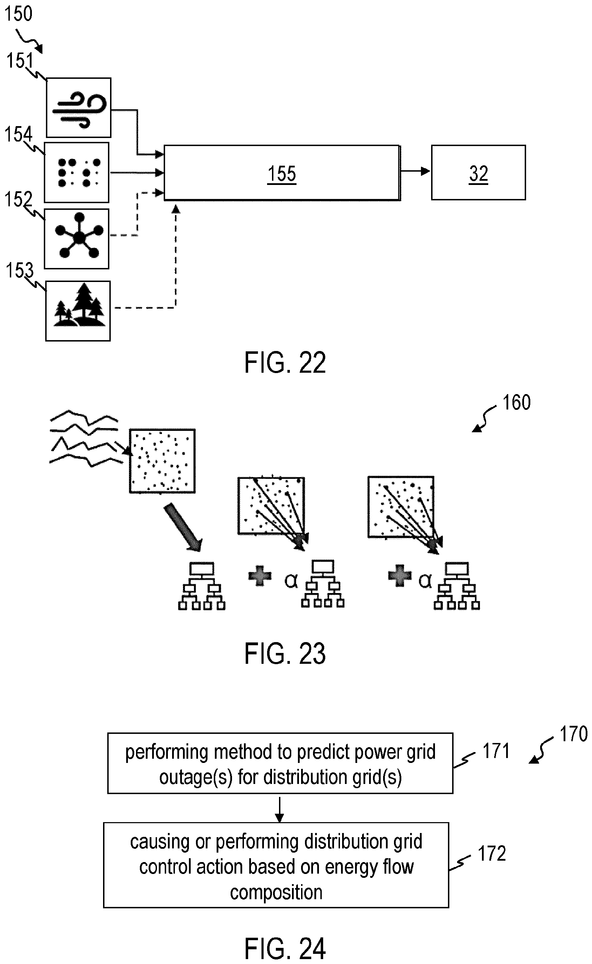

Fig. 22 is a schematic representation that illustrates the training. A computing system 155, which may be different from the processing system 155, receives input 150 to perform the training. The input 150 comprise time series data 151 of at least one variable that affects grid outages, such as weather variable(s). The input 150 further comprises the number or fraction 154 of customers having experienced outages in response to the variable(s). The input 150 may comprise optional additional input, such as a historical data 152 related to the power grid and/or historical data 153 related to the terrain. The processing system 155 performs the training, using the techniques discussed herein above, to generate the data-driven processing technique 32. Generating the data-driven processing technique 32 may comprise determining and communicating at least parameters, optionally also hyperparameters, of a ML model, such as a decision-tree based ML model.

The outage prediction may be performed using a data-driven processing technique that is based on a tree-based ensemble method such as XGboost. When implemented using an XGBoost model, the XGBoost model may be trained by sequentially building new trees that are added onto a base learner with a learning rate α used to avoid overfitting, as illustrated in Fig. 23 that schematically illustrates the addition with a learning rate, respectively based on training data.

During training, a loss function of the sum of quadratic residuals may be used. Other loss functions can also be used.

The proposed training technique is not restricted to XGboost or tree-based methods, but is applicable for any method predicting a continuous variable, be it a time-series specific method or a general regression method.

The techniques disclosed herein may be used in particular in association with power distribution systems, such as distribution grids having renewables penetration.

Fig. 24 is a flow chart of a method 170 that may be performed by or using the processing system according to any aspect or embodiment disclosed herein.

At process block 171, the method of predicting power grid outages according to any aspect or embodiment disclosed herein is performed.

At process block 172, a control action is performed or is caused to be performed based on the results of the power grid outage prediction at process block 171.

The processing system and method according to embodiments provide an enhanced technique for estimating the number of customers without power. In some implementations, the processing system and method process input data that comprises weather and outage data to predict the output value, which is a quantitative indicator for the number or fraction of customers expected to experience and outage. The processing system and method may optionally be operative such that additional information such as number of particular grid assets, vegetation status or population data can be used as additional inputs.

The processing system and method are operative such that the determination of quantitative information specifying the number of fraction of uses expected to experience and outage is based on a data-driven method, such as XGBoost or another data-driven technique. The general techniques disclosed herein are applicable to a variety of statistical and machine learning methods such as tree-based solutions, convolutional neural networks, long-short term neural networks, ensemble learning etc. Optionally, the data processing system and method may be operative such that it provides an explainability feature which quantifies the impact of each input feature on the output prediction, as well as, optionally, uncertainty ranges and trustworthiness score as additional features.

Various effects and advantages are attained by the processing system and the method according to aspects or embodiments. The processing system and method allow quantitative information related to expected outages to be determined, thereby allowing a system operator to be better prepared with respect to the expected number and location of customers without power. This allows the utilities to restore power faster and more efficiently. The processing system and method may be operative so as to provide an estimate of outages for various future horizons, and serve as a support for system operators to schedule pro-active and recovery measures in order to reduce grid downtime. The processing system and method may be operative so as to be applicable for both normal weather and operating conditions as well as extreme weather events such as storms and hurricanes. The processing system and method may be operative so as to be applicable across range of geographies (both location and sizes) as long as historic and real-time weather and outage data as well as weather forecasts are available. For instance, it can provide a prediction of total outages on an aggregated level such as within a county, city or a state. The processing system and method may be operative so as to provide insights into the most important factors influencing the predicted outages via the explicability feature. The processing system and method may be operative so as to provide a measure of uncertainty about the prediction via prediction intervals. The processing system and method may be operative so as to provide an indication of how trustworthy a prediction is, i.e., how similar the application data is to the training data, via the trustworthiness.

While embodiments have been described in detail with reference to the drawings, various modifications may be implemented in other embodiments. For illustration rather than limitation, while embodiments have been described in which the data-driven processing technique is operative to process timeseries data comprising method variable measurements, the data-driven processing technique may also be operative to (and be trained to) predict the number of customers expected to experience and outage based on extreme weather event indicators. While embodiments have been described in which the data-driven processing technique comprises an XGboost model, the data-driven processing technique may comprise another AI model or even a statistically model that does not need to be an ML model. While embodiments have been described in association with determining the grid outage indicator for a distribution grid, the techniques are also operative to determine the number or fraction of consumers expected to experience a grid outage for a transmission grid. In this case, the processing system and/or the method may be operative to determine the grid outage indicator that indicates the number or fraction of consumers directly connected to the transmission grid and expected to experience an outage.

Embodiments may be used in association with a power grid having renewables penetration, such as power grid comprising renewable energy systems (such as DERs), and/or HVDC systems, without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures, and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method of performing a grid outage prediction, the method comprising:
receiving, by a processing system (20), input data (28), the input data (28) being indicative of values of at least one variable that affects occurrence of grid outages in an area, the values comprising values for a first time period (46) preceding a time at which the grid outage prediction is performed and forecast values for a second time period (47) later than the time at which the grid outage prediction is performed;
determining, by the processing system (20), at least one grid outage indicator (45) over a predictive horizon, wherein determining the at least one grid outage indicator (45) comprises:
providing, by the processing system (20) and based on the values for the first time period (46) and the forecast values for the second time period (47), input signals (40) for a data-driven processing technique (32); and
processing, by the processing system (20), the input signals (40) using the data-driven processing technique (32), wherein the data-driven processing technique (32) provides the at least one grid outage indicator (45) as an output, wherein the at least one grid outage indicator (45) quantifies a number or fraction of customers in the area predicted to experience a grid outage over the predictive horizon.

2. The method of claim 1, wherein determining the at least one grid outage indicator (45) comprises determining, using the data-driven processing technique (32), the at least one grid outage indicator (45) for several points in time within the predictive time horizon (47).

3. The method of claim 2, further comprising controlling a user interface to enable user input specifying at least one of: a number of the several points in time within the predictive time horizon (47); a duration of the predictive time horizon (47).

4. The method of claim 2 or claim 3, wherein the input data (28) is indicative of the values for each of several areas, and wherein determining, by the processing system (20), the at least one grid outage indicator (45) comprises applying the data-driven processing system (20) to the input signals (40) provided for each of the several areas to determine the at least one grid outage indicator (45) in a spatially resolved manner and/or spatiotemporally resolved manner.

5. The method of any one of the preceding claims, wherein
the input data (28) further comprises outage data for at least part (48) of the first time period (46), the outage data quantifying the a number or fraction of customers located in the area and determined to already have experienced the grid outage in the part (48) of the first time period (46);
wherein the input signals (40) are provided based on the outage data.

6. The method of any one of the preceding claims, wherein the data-driven processing technique (32) is agnostic of a configuration and settings of a power grid (104, 105) for which the grid outage prediction is performed.

7. The method of any one of the preceding claims, wherein the grid outage prediction comprises a grid outage prediction for a distribution grid (104, 105), wherein the at least one grid outage indicator (45) quantifies a number or fraction of distribution grid customers predicted to experience the outage over the predictive horizon (47).

8. The method of any one of the preceding claims,
wherein processing the input data (28) comprises determining one or several of the following:
an explainability (72) that quantifies contributions of the various input signals (40) to the at least one grid outage indicator (45);
an uncertainty (71) of the at least one grid outage indicator (45);
a trustworthiness (73) that quantifies a similarity of the input signals (40) to training data used in training the data-driven processing technique (32);
wherein the processing system (20) triggers the at least one action further based on one, several, or all of the above.

9. The method of any one of the preceding claims, wherein the at least one variable comprises weather data (41) or an extreme weather indicator.

10. The method of any one of the preceding claims, wherein the input data (28) comprises one or both of: power grid data (42) related to the area; terrain data (43) related to the area.

11. The method of any one of the preceding claims, further comprising:
determining, by the processing system (20) or by a computing system (155) different from the processing system (20), parameters of the data-driven processing technique (32), wherein determining the parameters comprises performing a supervised training based on training data that comprise both measured weather variables (151) and grid outages (154) observed during power grid field operation under the measured weather variables (151).

12. The method of any one of the preceding claims, further comprising triggering, by the processing system (20), at least one action based on the at least one grid outage indicator (45); optionally wherein the at least one action comprises one, several, or all of:
an output action that outputs information related to the at least one grid outage indicator (45) via an interface;
a grid control action;
a restoration action that helps restore power to customers affected by grid outages.

13. A generation method of generating a data-driven processing technique (32) for grid outage prediction, the generation method comprising:
obtaining, by a training system (155), training data (150), the training data (150) comprising
data (151-153) indicative of values of at least one variable that affects occurrence of grid outages in at least one area;
grid outage data (154) indicative of a number or fraction of customers located in the at least one area and determined to have experienced a grid outage; and
determining, by the training system (155), a time duration (46) over which the at least one variable needs to be considered to perform the grid outage prediction, wherein the time duration (46) depends on a lagging effect between the occurrence of the grid outages and changes in the at least one variable;
training, by the training system (155), the data-driven processing technique (32), based on the values of the at least one variable that are selected from the training data based on the determined time duration with a training objective of outputting, by the data-driven processing technique (32), a grid outage indicator (45) that quantifies the number or fraction of the customers determined to have experienced a grid outage.

14. Machine-readable instruction code which, upon execution by at least one programmable processing circuit (30), causes the at least one programmable processing circuit (30) to perform the method of any one of the preceding claims.

15. A processing system (20) operative to perform a grid outage prediction, the processing system (20) comprising:
at least one interface (21) operative to receive input data (28), the input data (28) being indicative of values of at least one variable that affects occurrence of grid outages in an area, the values comprising values for a first time period (46) preceding a time at which the grid outage prediction is performed and forecast values for a second time period (47) later than the time at which the grid outage prediction is performed; and
at least one processing circuit (30) operative to determine at least one grid outage indicator (45) over a predictive horizon, the at least one processing circuit (30) being operative to perform at least the following operations to determine the at least one grid outage indicator (45):
providing, based on the values for the first time period (46) and the forecast values for the second time period (47), input signals (40) for a data-driven processing technique (32); and
processing, by the processing system (20), the input signals (40) using the data-driven processing technique (32), wherein the data-driven processing technique (32) provides the at least one grid outage indicator (45) as an output, wherein the at least one grid outage indicator (45) quantifies a number or fraction of customers in the area predicted to experience a grid outage over the predictive horizon.
